Europäisches Patentamt

European Patent Office

Office européen des brevets

(11) Veröffentlichungsnummer: **0 002 464**
B1

(12) # EUROPÄISCHE PATENTSCHRIFT

(45) Veröffentlichungstag der Patentschrift:
28.10.81

(51) Int. Cl.³: **B 32 B 31/12,** B 32 B 5/24,
D 06 N 3/14, B 29 C 27/00

(21) Anmeldenummer: 78101469.1

(22) Anmeldetag: 29.11.78

(54) Verfahren zur lösungsmittelfreien Beschichtung von Substraten.

(30) Priorität: 08.12.77 DE 2754593

(43) Veröffentlichungstag der Anmeldung:
27.06.79 Patentblatt 79/13

(45) Bekanntmachung des Hinweises auf die Patenterteilung:
28.10.81 Patentblatt 81/43

(84) Benannte Vertragsstaaten:
DE FR GB

(56) Entgegenhaltungen:
DE-A-2 012 662
DE-A-2 108 194
DE-A-2 651 392

(73) Patentinhaber: BAYER AG, Zentralbereich Patente, Marken und Lizenzen, D-5090 Leverkusen 1, Bayerwerk (DE)
Patentinhaber: Mobay Chemical Corporation, Penn Lincoln Parkway West, Pittsburgh, Pennsylvania 15205 (US)

(72) Erfinder: Weber, Karl-Arnold, Dr., Saarstrasse 59, D-5090 Leverkusen (DE)
Erfinder: Walter, Kurt, Springfield Road P.O. Box 385, Union N.J. (US)
Erfinder: Prochaska, Helmuth, 48 Ferguson Road, Warren N.J. 07060 (US)

(74) Vertreter: Müller, Heinz-Gerd, Dipl.-Ing. et al, c/o Bayer AG Zentralbereich Patente Marken und Lizenzen, D-5090 Leverkusen 1, Bayerwerk (DE)

## Verfahren zur lösungsmittelfreien Beschichtung von Substraten

Die Erfindung betrifft ein Verfahren zur lösungsmittelfreien Beschichtung von Substraten, nämlich Leder, Spaltleder und Textilien, nach einem Thermo-Kaschier-Verfahren, mit Hilfe einer Folie, welche aus einer abriebfesten Deckschicht und einer nach speziellen Verfahren hergestellten Polyurethan-Schaumschicht bestimmter Dicke und Raumgewicht aufgebaut ist.

Für die Herstellung von Beschichtungen sind sowohl Direkt- als auch Umkehrbeschichtungsverfahren gebräuchlich. In Direktbeschichtungsverfahren wird die Beschichtung sofort auf den bleibenden Träger aufgetragen, bei Umkehrbeschichtungen wird die Beschichtung zunächst auf einen Trennträger aufgebracht und von diesem zu einem späteren Zeitpunkt auf den bleibenden Träger übertragen. Als Trennträger sind in der Praxis Trennpapiere, Trennläufer und Stahlbänder eingeführt. Zum Stand der Technik gehörende Auftragsverfahren für die Herstellung von Beschichtungen sind z.B. Rakeln, Sprühen, Giessen, Kalandern, Streuen oder Sieben. Insbesondere sind in diesem Zusammenhang neben den Giessverfahren die Rakelverfahren von Bedeutung. Ferner sind Thermokaschierverfahren, insbesondere Flammkaschierverfahren, bekannt.

Beschichtungen nach dem Rakelverfahren können in einem oder mehreren Aufträgen aufgebracht werden. Im Einstrichverfahren arbeitet man z.B. im allgemeinen bei der Oberflächenverfestigung von Watte, der Noppenverfestigung von Teppichen und bei der Herstellung leicher, wasserdichter Textilien (Regenmäntel, leichte Planenstoffe). Meist wird jedoch bei der Herstellung von Beschichtungen zunächst auf das Substrat ein weicherer Haftstrich aufgebracht, der als Verbindung bzw. als Pufferschicht zwischen dem Substrat und einer meist härteren und kratzfesteren zweiten Schicht, dem sogenannten Deckstrich, dient. Deck- und Haftstrich haben dabei in vielen Fällen verschiedene chemische Zusammensetzungen. In Frage kommen beispielsweise Kombinationen verschiedener Polyurethansysteme, Kombinationen aus Polyurethan und Polyacrylat, Polyurethan und PVC etc.. Der Aufbau von Beschichtungen in zwei oder mehreren Strichen hat den Vorteil, dass die Eigenschaften durch Variation der Schichtfolge, der Schichtdicke und ihrer chemischen Zusammensetzung gezielt auf die speziellen Verwendungszwecke des fertigen Materials abgestimmt werden können.

Aufgrund ihrer grossen Variationsbreite und des hohen allgemeinen Echtheitsniveaus werden für die Beschichtung von Textilien und Leder im allgemeinen bevorzugt Polyurethane eingesetzt. In Frage kommen hierfür z.B. die sogenannten «Zweikomponenten-Polyurethane». Es sind dies Reaktivsysteme, welche beispielsweise aus einem Isocyanatgruppen aufweisenden Voraddukt und einem geeigneten Kettenverlängerungsmittel (meist einem aromatischen Diamin) bestehen, welche getrennt oder gemeinsam mit einem Lösungsmittel verdünnt auf das zu beschichtende Substrat aufgegossen oder aufgesprüht werden. Verfahren dieser Art werden beispielsweise in den deutschen Patentschriften 838 826, 872 268, der DE-B- 1 023 449, der DE-B- 1 240 656 (US-Patent 3 281 396) sowie insbesondere der DE-A- 1 570 524 (US-Patent 3 475 266) beschrieben. Umgekehrt ist es selbstverständlich auch möglich, Zweikomponenten-Polyurethane aus einem relativ hochmolekularen, isocyanatgruppen-freien Voraddukt, welches noch gegenüber Isocyanaten reaktive Gruppen aufweist, und niedermolekularen Isocyanaten aufzubauen. Ein solches Verfahren wird beispielsweise in der DE-A- 2 221 756 (US-Patent 3 904 796) beschrieben.

Im Gegensatz zu diesen seit längerem bekannten Zweikomponenten-Polyurethanen sind die sogenannten Einkomponenten-Polyurethane neuerer Stand der Technik. Diese bereits voll ausreagierten, hochmolekularen Produkte werden durch Umsetzung von Polyhydroxylverbindungen, in der Praxis vor allem Dihydroxypolyestern oder Dihydroxypolyäthern, im Gemisch mit Glykolen, vorzugsweise Äthylenglykol und/oder Butandiol, mit aromatischen Diisocyanaten, bevorzugt 4,4'-Diphenylmethandiisocyanat, erhalten. Diese sowohl in der Schmelze als auch in Lösung herstellbaren, im wesentlichen linearen Polyurethane werden in Form von Lösungen bzw. Lösungsmittelgemischen eingesetzt, welche Dimethylformamid und/oder andere hochpolare Verbindungen enthalten. Ein Vorteil der Einkomponenten-Polyurethane ist ihre praktisch unbegrenzte Topfzeit. Neben den aus aromatischen Diisocyanaten aufgebauten sogenannten aromatischen Einkomponenten-Polyurethanen gehören zum Stand der Technik auch die sogenannten aliphatischen Einkomponenten-Polyurethane; es handelt sich dabei um Polyurethanharnstoffe aush höhermolekularen Dihydroxyverbindungen, aliphatischen Diisocyanaten und aliphatischen Diaminen bzw. Bis-Hydraziden, Bis-Semicarbaziden und Bis-Carbazinsäureestern als Kettenverlängerer. Diese aliphatischen Einkomponenten-Polyurethane werden aus Lösungsmittelgemischen, die neben aromatischen Kohlenwasserstoffen sekundäre oder primäre Alkohole enthalten, appliziert. In jüngster Zeit werden neben den bisher beschriebenen Polyurethansystemen auch wässrige Polyurethandispersionen zur Beschichtung von Leder oder Textilien eingesetzt. Allen bisher beschriebenen konventionellen Beschichtungsverfahren ist gemeinsam, dass die Beschichtungsmittel in gelöster oder pastöser Form auf das Substrat appliziert werden, worauf die Beschichtung durch Verdampfung des Lösungsmittels bzw. Dispergiermittels verfestigt wird. Diese Arbeitsweise hat — vor allem, wenn eine Beschichtung in mehreren Lagen aufgetragen wird – für den Verarbeiter den Nachteil, dass relativ aufwendige Beschichtungsapparaturen erforderlich sind, die aus mehreren Vorrichtungen zum gleichmässigen Auftragen der einzelnen Striche und aus mehreren Heizzonen zur Verfestigung der aufgetragenen Schichten bestehen. Darüber hinaus sind auch Anlagen erforderlich, in welchen aus Umweltschutzgründen das eingesetzte Lösungsmittel bzw. Lösungsmittelgemisch wiedergewonnen wird.

Zum Stand der Technik gehört auch die Laminierung von Substraten mit vorgefertigten Kunststoffolien. Der Verarbeiter bestreicht, pflatscht oder besprüht dabei in analoger Weise wie oben die Kunststoffolie mit einem geeigneten Klebstrich (z.B. Einkomponenten-Polyurethan; Polyurethandispersion; Acrylat-Dispersion) und kaschiert darauf z.B. das textile Substrat. Nachteilig ist hierbei wieder die notwendige Mitverwendung von Lösungs-bzw. Dispergiermitteln, die nach der Kaschierung aus dem beschichteten Material entfernt werden müssen.

Gemäss DE-B 1 016 680, DE-A 2 108 194 und US-A 2 957 793 werden Schaumstoffe mit Textilien kaschiert, indem ebenfalls die Oberfläche des Schaumstoffs durch Einwirkung einer Flamme bzw. durch ein Infrarotfeld aufgeschmolzen und dann das Textil auf diese klebrige Oberfläche aufgebracht wird. Die verwendeten Schaumstoffolien sind jedoch relativ dick und weisen keine Deckschicht auf.

Es ist beispielsweise aus der deutschen Patentschrift 1 128 123 bekannt, dass für das Verbinden von Polyurethan-Schaumstoffen mit anderen Materialien unter oberflächlichem Schmelzen der Schaumstoffschicht recht beträchtliche Mengen des Polyurethans geschmolzen werden müssen, um befriedigende Verklebungsergebnisse zu erzielen. So soll nach den Angaben der genannten deutschen Patentschrift der Polyurethanschaum in einer Schichtstärke von 0,15 bis 0,8 mm erschmolzen werden, um eine ausreichende Haftfestigkeit zwischen Schaumstoff und aufgebrachtem Material zu erzeugen. Beim unteren Zahlenwert werden nur sehr schwache Bindungsfestigkeiten erhalten. Beispielsweise beträgt die Bindungsfestigkeit zwischen einer Polyurethan-Schaumstoffbahn und einem Polyamid-Trikotgewebe beim Erschmelzen des Polyurethanschaums in 0,15 mm Schichtdicke 0,0191 kg/cm. In der Praxis muss daher bei der bis heute üblichen Kaschierung eines Polyurethan-Schaumstoffes eine Schaumstoffschicht beträchtlicher Stärke erschmolzen werden, um befriedigende Haftfestigkeiten zu erzielen. Üblich sind Dickenverluste des Schaumstoffes von mindestens 0,4 mm, meist über 0,6 mm.

In der DE-A 2 108 194 wird ein Verfahren beschrieben, wo Polyurethanschaumstoffe mit normalerweise schlecht darauf haftenden thermoplastischen Kunststoffbahnen wie Polyethylen, Polypropylen, Polystyrol oder deren Copolymerisaten unter thermischem Erweichen oder Anschmelzen des Kunststoffs, z.B. in Infrarotfeldern oder in einer Gasflamme, dann gut verbunden werden können, wenn die Kunststoffoberflächen einer Oberflächenbehandlung zur Verbesserung der Bedruckbarkeit, z.B. Hitzeoxidation, Oxidation mit stark oxidierenden Säuren oder elektronische Vorbehandlung (z.B. Corona-Entladung) unterworfen worden sind. In den Beispielen 1 und 4 wird so eine Vorbehandlung von Polyethylen, Polypropylen, Styrol/Acrylnitril, Polystyrol und von Polypropylenschaum mittels einer Coronaentladung vorgenommen und durch Flammkaschierung mit 5 mm starkem Plyesterurethanschaumstoff unter Dickenminderung durch das Anflammen von 0,5 mm eine Flammkaschierung von vorbehandelter Kunststoffolie und Schaumstoff erzielt. Als vorbehandelte Kunststoffolien können auch Verbundfolien oder Verbundmaterialien aus Folie und Textil verwendet werden, wobei jedoch sinngemäss die Vorbehandlung und Kaschierung auf die Kunststoffolie erfolgt.

Es handelt sich hierbei auch nicht um die erfindungsgemäss einzusetzenden, nach speziellen Verfahren hergestellten Polyurethanschaumstoffe, sondern um Schaumstoff-Folien, welche z.B. durch Zerschneiden von auf üblichem Wege hergestellten Schaumstoffblöcken erhalten wurden. Derartige Schaumstoffolien führen jedoch im thermischen Kaschierverfahren zu Beschichtungen mit geringer Haftfestigkeit. Ausserdem sind solche Schaumstoffe zu grobporig, was sich auf den Narbenwurf des Fertigmaterials negativ auswirkt.

Gemäss einem eigenen älteren Vorschlag (DE-A 2 651 392) werden textile Flächengebilde bei einer Temperatur von 160 bis 350 °C mit einer bei dieser Temperatur erweichenden, mit wasserunlöslichen Farbstoffen gefärbten und/oder bedruckten Schaumstoffolie verpresst. In diesem Falle dient die Schaumstoffolie jedoch nicht zur Beschichtung des Textils, sondern nur als Farbstoffüberträger; das Verpressen erfolgt unter solchen Bedingungen, dass das Polyurethan praktisch vollständig in das textile Basismaterial eindringt.

Von N. Münch wird in «Das Leder», 22. Jahrgang, Nr. 12, (Dezember 1971), Seite 269, ein Verfahren zur Zurichtung von Leder beschrieben, in welchem ein dünner Polyurethan-Finish (3 bis 5 μ) mittels eines Papiers auf Leder aufgetragen wird. Es handelt sich hierbei jedoch um keine Beschichtung mittels einer mehrschichtig aufgebauten Folie wie im erfindungsgemässen Verfahren, sondern um eine blosse Zurichtung von Leder.

Zum Stand der Technik gehören auch Verfahren zur Heissversiegelung von Textilien, wobei ein textiles Substrat mit einem niedrig schmelzenden Polyurethan, Polyester, Polyamid oder PVS in Form eines Pulvers, einer Suspension oder Dispersion an der Oberfläche imprägniert und danach mit einem zweiten Textilmaterial verpresst wird. Das Polymere dient dabei jedoch nicht zur Beschichtung eines Substrates, sondern nur zur Verklebung verschiedener Textilbahnen.

Aufgabe der Erfindung ist es nun, ein einfaches, lösungsmittelfreies Beschichtungsverfahren in Form einer thermischen Kaschierung zur Verfügung zu stellen, welches gleichermassen für textile Substrate, Vliesstoffe, Leder und Spaltleder geeignet ist, keine komplizierten Vorbehandlungen erfordert, keinen wesentlichen Verlust an Schaumstoffdicke bedeutet und mit den üblichen Maschinen eines Verarbeiterbetriebs ausgeführt werden kann. Die Beschichtung soll abriebfest, weich und auf dem Substrat ganzflächig gleichmässig haftend sein.

Erfindungsgemäss wird diese Aufgabe gelöst, indem eine zweischichtige Folie, bestehend aus einer Deckschicht, welche dem beschichteten Substrat Abrieb- und Kratzfestigkeit verleihen soll, und einer nach speziellen Verfahren hergestellten Polyurethan-Schaumschicht mittels eines Infrarotfeldes oder einer Gasflamme an der Oberfläche der Schaumschicht über deren Erweichungspunkt erhitzt und danach mit dem zu beschichtenden Substrat kaschiert wird.

Gegenstand der vorliegenden Erfindung ist somit ein Verfahren zur lösungsmittelfreien Beschichtung von Textilien, Leder oder Spaltleder mit einem Flächengebilde auf Basis eines Polyurethanschaums, wobei man eine Oberfläche des Schaums mittels eines Infrarotfeldes oder einer Flamme über ihren Erweichungspunkt erwärmt und danach mit dem zu beschichtenden Substrat kaschiert, wobei die erweichte Oberfläche der Schaumschicht dem Substrat zugewandt ist, dadurch gekennzeichnet, dass das Flächengebilde auf Basis eines Polyurethanschaums eine zweischichtige Folie ist, welche aus
a) einer gegebenenfalls gefärbten Deckschicht mit einem Gewicht von 20 bis 300 g/m² und
b) einer Polyurethan-Schaumschicht mit einer Dikke zwischen 0,2 und 0,5 mm und einem Raumgewicht zwischen 500 und 800 g/l, welche entweder durch Einrühren von Luft in eine wässrige Polyurethan-Dispersion und anschliessendes Auftrocknen oder durch Aushärten eines reaktiven Gemisches aus einer höhermolekularen Polyhydroxylverbindung, einem Polyisocyanat und einer Verbindung, die beim Erhitzen ein Gas abspaltet, hergestellt wurde, aufgebaut ist.

Die kratz- und abriebfeste Deckschicht der erfindungsgemäss zu verwendenden Zweischichtfolie hat vorzugsweise einen Erweichungsbereich, welcher zwischen etwa 130 und 150 C liegt. Überraschenderweise kann erfindungsgemäss der Erweichungspunkt der Deckschicht (trotz der thermischen Belastung während der Kaschierung) gleich hoch oder sogar niedriger als jener der Schaumschicht liegen, ohne dass die Deckschicht beim Kaschieren zerstört wird.

Ihr Gewicht liegt zwischen 20 und 300 g/m², vorzugsweise zwischen 30 und 200 g/m². Für die Herstellung der Deckschicht, die vorzugsweise aus Polyurethan besteht, kommen die handelsüblichen Ein-und Zweikomponenten-Polyurethane in Betracht, wie sie in der Beschichtungsindustrie für die Herstellung von Textil- und Lederbeschichtungen eingesetzt werden.

Die Schaumschicht, die insbesondere zur Verbesserung von Griff und Fülle des beschichteten Materials dient, sollte so feinporig und dünn wie möglich sein. Vorzugsweise besitzt sie einen Erweichungsbereich zwischen 150 und 240 °C. Sie weist eine Dicke von 0,2 bis 0,5 mm und ein Raumgewicht von 500 bis 800 g/l, besonders bevorzugt ca. 600 g/l, auf. Bevorzugt wird die Schaumschicht direkt in situ auf der Deckschicht hergestellt. Hierfür kommen einerseits Polyurethanschäume, wie sie durch Einrühren von Luft in wässrige Dispersionen von ionischen oder nichtionischen Polyurethanen und anschliessendes Auftrocknen hergestellt werden können, in Frage. Verfahren dieser Art werden in den deutschen Offenlegungsschriften 2 231 411 (US-Patent 3 989 870) und 2 343 294 (US-Patent 3 989 869) beschrieben. Eine andere Möglichkeit besteht darin, sogenannte Reaktivschäume einzusetzen, wie sie beispielsweise in den deutschen Offenlegungschriften 1 444 170 (US-Patent 3 262 805) und 1 794 006 (Kanadisches Patent 758 229) beschrieben werden.

Die erfindungsgemäss zu verwendenden Zweischichtfolien können auf normalen Beschichtungsanlagen, welche mindestens zwei Streichköpfe aufweisen sollten, vorzugsweise nach dem Umkehrverfahren hergestellt werden: Zunächst wird auf einen Trennträger, vorzugsweise ein Trennpapier mit gegebenenfalls strukturierter Oberfläche, die Deckschicht durch Giessen, Sprühen oder Rakeln aufgetragen und anschliessend in einem Heizkanal ausgehärtet. Danach wird auf den Deckstrich direkt in situ die Polyurethan-Schaumschicht erzeugt. Man kann zu diesem Zweck entweder gemäss DE-A 2 343 294 eine nichtionische Polyurethandispersion mit einem Feststoffgehalt von mehr als 45 Gew.-% Polyurethan, einer Viskosität von 10 bis 70 Sekunden Auslaufzeit aus dem Fordbecher mit 4 mm-Düse und einem Teilchendurchmesser von weniger als 1,0 μ, die zusätzlich noch 0,1 bis 10 Gew.-% Verdickungsmittel, bezogen auf Polyurethanfeststoff, enthält, nach dem Schaumschlagverfahren zu einem streichfähigen, nichtionischen Polyurethanlatexschaum verarbeiten, diesen Schaum in der gewünschten Dicke auf die vorgefertigte Deckschicht aufbringen und danach die Schaumschicht trocknen. Eine andere Möglichkeit besteht darin, nach der Arbeitsweise von DOS 2 231 411 auf die vorgefertigte Deckschicht einen ionischen Polyurethanlatexschaum aufzutragen, welcher nach dem Schaumschlagverfahren aus ionomeren Polyurethandispersionen mit einem Feststoffgehalt von 45 bis 62 Gew.-% Polyurethan, einer Viksosität von 10 bis 70 Sekunden Auslaufzeit aus dem Fordbecher mit 4 mm-Düse, einem Teilchendurchmesser von 0,05 bis 1,0 μ, einem Gehalt an ionischen Gruppen von 3 bis 40 Milliäquivalenten pro 100 g Polyurethanfeststoff und einer Mindestzugfestigkeit einer aus ihnen erzeugten homogenen Polyurethanfolie (ohne Vernetzer, Füllstoffe und Schaummittel) von 40 N/cm² hergestellt wurde, wobei die ionomeren Polyurethandispersionen 1 bis 10 Gew-% Schaummittel, bezogen auf Polyurethanfeststoff, 0,1 bis 10 Gew.-% Verdickungsmittel, bezogen auf Polyurethanfeststoff, sowie gegebenenfalls Füllstoffe und Vernetzer enthalten.

Erfindungsgemäss bevorzugt ist es jedoch, ein Polyurethan-Reaktivschaumsystem einzusetzen, welches im wesentlichen ein reaktives Gemisch aus einer höhermolekularen Polyhydroxylverbindung, einem Polyisocyanat und einer Verbindung, die beim Erhitzen ein Gas abspaltet, darstellt. Man streicht dieses Reaktivgemisch auf die vorgefertigte Deckschicht und führt danach das Material durch einen Trockenkanal, wobei die Mischung ausreagiert und gleichzeitig die Schicht aufgrund der Zersetzung des Treibmittels aufschäumt.

Insgesamt sollte die erfindungsgemäss zu verwendende Zweischichtfolie eine Dicke von mehr als ca. 0,25 mm aufweisen, damit Unebenheiten des Substrats (insbesondere trifft dies für Spaltleder zu) an der Oberfläche nicht sichtbar werden. Die maximale Dicke liegt vorzugsweise bei ca. 0,6 mm.

Diese erfindungsgemäss beschränkte Dicke der Schaumstoffschicht zwischen ca. 0,2 und 0,6 mm entspricht in etwa dem Anteil an Schaumstoff, der im Flammkaschierverfahren üblicherweise abgeschmolzen wird (vgl. DE-B 1 128 123). Hierin lässt sich auch einer der Vorteile des erfindungsgemässen Verfahrens erkennen, dass man im thermischen Kaschierprozess – auch in der Flammkaschierung – mit den erfindungsgemäss ausgewählten Polyurethanschaumstoffen eine hohe Klebkraft bei nur sehr geringer Einbusse an Schaumstoffdicke erzielt wird und die vorteilhaft weichen Griffeigenschaften der Beschichtungen beibehält.

Die erfindungsgemäss bevorzugten Reaktivschaumsysteme bestehen aus einem Polyisocyanat, einer Polyhydroxylverbindung mit einem Molekulargewicht zwischen ca. 400 und 10 000 bzw. einem Hydroxylgruppen aufweisenden Umsetzungsprodukt von Polyisocyanaten mit Polyhydroxylverbindungen vom Molekulargewicht 400 bis 5000, welche eine Viskosität von ca. 10 000 bis 30 000 cP/25 °C in Substanz oder bei Mitverwendung von bis zu 10% eines inerten Lösungsmittels aufweisen, einem Treibmittel, einem Beschleuniger sowie einem Schaumstabilisator.

Die Polyhydroxylverbindungen haben vorzugsweise ein Molekulargewicht zwischen 800 und 6000, besonders bevorzugt zwischen 1000 und 4000. Es sind dies mindestens 2, in der Regel 2 bis 4, besonders bevorzugt 2 oder 3, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terepthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3) Hexandiol-(1,6), Octandiol-(1,8), Neopentylglykol, Cyclohexandimethanol(1,4)-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von BF$_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, 4,4'-Dihydroxy-diphenylpropan, Anilin, Äthanolamin oder Äthylendiamin hergestellt. Auch Sucrosepolyäther, wie sie z.B. in den deutschen Auslegeschriften 1 176 358 und 1 064 938 beschrieben werden, kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z.B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536), sind geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester oder Polythioätheresteramide.

Als Polyacetale kommen z.B. die aus Glykolen wie Diäthylenglykol, Triäthylenglykol, 4,4'-Dioxäthoxydiphenyldimethylmethan, Hexandiol und Formaldehyd herstellbaren Verbindungen in Frage. Auch durch Polymersiation cyclischer Acetale lassen sich erfindungsgemäss geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol oder Tetraäthylenglykol mit Diarylcarbonaten, z.B. Diphenylcarbonat, oder Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

Vertreter dieser erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyäthern und Polyestern, eingesetzt werden.

Als weitere Ausgangskomponente für die Reaktiv-Schaumsysteme kommen aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785, amerikanische Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenyl-polymethylen-polyisocyanate, wie sie durch Anilin-Formaldehyd-Kondensation und anschliessende Phosgenierung erhalten und z.B. in den britischen Patentschriften 874 430 und 848 671 beschrieben werden, m- und p-Isocyanatophenylsulfonyl-isocyanate gemäss der amerikanischen Patentschrift 3 454 606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in der amerikanischen Patentschrift 3 001 973, in den deutschen Patentschriften 1 022 789, 1 222 067 und 1 027 394 sowie in den deutschen Offenlegungsschriften 1 929.034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäss der deutschen Patentschrift 1 230 7,78, Biuretgruppen aufweisende Polyisocyanate, wie sie z.B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie zum Beispiel in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäss der deutschen Patentschrift 1 072 385 und polymere Fettsäurereste enthaltende Polyisocyanate gemäss der amerikanischen Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugte Polyisocyanate sind dimeres 2,4-Toluylendiisocyanat, das Umsetzungsprodukt von einem Mol Trimethylolpropan und 3 Molen 2,4- und/oder 2,6-Toluylendiisocyanat und 4,4'-Diphenylmethandiisocyanat, welches durch Reaktion mit einer kleinen Menge an niedermolekularem Glykol verflüssigt worden ist.

Als Treibmittel kommen durch Zusatz von bei erhöhter Temperatur unter Abspaltung von Gasen, beispielsweise von Stickstoff, sich zersetzende Verbindungen in Frage, z.B. Azoverbindungen wie Azoisobuttersäurenitril, Azodicarbonamid und p-Toluolsulfoazid. Besonders bevorzugt ist Azodicarbonamid.

Als Beschleuniger für die Zersetzung der genannten Treibmittel kommen allgemein mehrwertige Schwermetallsalze in Betracht. Bevorzugt sind Mischsalze von Zink und Cadmium, besonders bevorzugt solche von längerkettigen Fettsäuren.

Geeignete Schaumstabilisatoren sind z.B. Polyäthersiloxane, welche im allgemeinen so aufgebaut sind, dass ein Copolymerisat aus Äthylenoxid und Propylenoxid mit einem Polydimethylsiloxanrest verbunden ist. Derartige Schaumstabilisatoren sind z.B. in den amerikanischen Patentschriften 2 834 748, 2 917 480 und 3 629 308 beschrieben. Besonders bevorzugt sind Siliconöle mit organo-funktionellen Endgruppen (s. z.B. die deutschen Auslegeschriften 1 114 632, 1 190 176 und 1 248 287).

Die wie oben beschrieben hergestellte zweischichtige Folie wird erfindungsgemäss vorzugsweise nicht vom Trennpapier abgelöst, sondern zusammen mit diesem an den Endverarbeiter versandt. Dies hat einerseits den Vorteil, dass die Verbundfolie beim Transport nicht beschädigt wird und gibt andererseits dem Endverarbeiter die Möglichkeit, beim Kaschieren mit dem zu beschichtenden Substrat die Verbundfolie mit dem Trennpapier gemeinsam einzusetzen, wodurch eine Verformung bzw. eine Zerstörung des Deckstrichs beim Verpressen vermieden wird.

Im erfindungsgemässen Verfahren wird die Oberfläche der Schaumschicht in einem Infrarotfeld oder in einer Flammkaschierungsanlage, wie sie z.B. in DE-B 1 016 680 und US-Patent 2 957 793 beschrieben werden, über ihren Erweichungspunkt erhitzt, worauf man das zu beschichtende Substrat (Textil, Vliesstoff, Leder oder Spaltleder) zukaschiert.

Um die Haftung der Beschichtung auf Leder bzw. Spaltleder zu verbessern, wird dessen Oberfläche bevorzugt vor dem Kaschieren mit einer wässrigen Polyurethandispersion vorbehandelt. Im allgemeinen imprägniert man dabei das Leder bzw. Spaltleder mit ca. 5 bis 10 g/m² Festsubstanz einer ca. 40%igen nichtionischen oder kationischen Polyurethandispersion. Für diese Vorbehandlung können alle an sich bekannten handelsüblichen Lederimprägnier- und -zurichtmittel auf Basis wässriger Polyurethandispersion eingesetzt werden. Gegebenenfalls kann man das Leder bzw. Spaltleder aber auch mit anderen Polymerdispersionen, beispielsweise solchen auf Basis von Acrylsäureestern bzw. Mischungen von Acrylsäureestern und weiteren olefinisch ungesättigten Monomeren sowie Acrylnitril-Butadien- Styrol-Mischpolymerisaten vorbehandeln.

Beispiel 1

a) Herstellung einer zweischichtigen Folie:

Auf einer Beschichtungsanlage, die nach dem Umkehrverfahren arbeitet, wird auf einem Umkehrpapier des Typs Transkote VEM die 30%ige Lösung eines cycloaliphatischen Polyurethanharnstoffs in einem Gemisch aus DMF, Toluol und Isopropanol mit einem Rakelmesser aufgestrichen. Die Höhe des Rakelmessers wird dabei so bemessen, dass die Auflage an Polyurethanfeststoff 40 g/m² beträgt. Dieser Deckstrich wird im Verlauf von 8 Minuten in einem Trockenkanal mit einer von 80 °C auf 150 °C ansteigenden Temperatur getrocknet. Auf den verfestigten Deckstrich wird in einer Auflagemenge von ca. 150–200 g Polyurethanfeststoff/m² ein schäumfähiges Reaktivgemisch aufgetragen. Danach wird das Laminat 4 Minuten in einen Trockenkanal von 170 °C eingeführt, wobei die Reaktionsmischung aufschäumt und aushärtet.

Der Polyurethanharnstoff wird durch Umsetzung eines Präpolymeren aus 120 Gew.-Teilen 1,4-Butandiol/Adipinsäure-Polyester (Molekulargewicht 2000) und 30 Gew.-Teilen Isophorondiisocyanat mit 6 Gew.-Teilen Isophorondiamin als Kettenverlängerungsmittel hergestellt. Sein Erweichungspunkt liegt bei ca. 210 °C.

Das schäumfähige Reaktivsystem besteht aus
a) 140 Gew.-Teilen an dimerisiertem 2,4-Toluylendiisocyanat
b) 1000 Gew.-Teilen einer Polyolkomponente, bestehend aus

60 Gew.-% eines linearen Polypropylenglykols (OH-Zahl 27)
15 Gew.-% eines schwach verzweigten, Urethangruppen enthaltenden Polypropylenoxids (OH-Zahl 32)
60 Gew.-% eines endständige Hydroxylgruppen aufweisenden Epoxidharzes aus Bisphenol A und Epichlorhydrin
15 Gew.-% eines anorganischen Weisspigments
2 Gew.-% Azodicarbonamid
1 Gew.-% Silikonöl
1 Gew.-% eines Cadmium/Zink-Mischsalzes von längerkettigen Fettsäuren.

Der Erweichungspunkt der Schaumschicht liegt bei ca. 220 °C.

b) Erfindungsgemässes Verfahren:

Die zweichsichtige Verbundfolie wird mit der Schaumschicht nach unten mit einer Geschwindigkeit von ca. 3 m/Minute durch ein 4 m langes Infrarotfeld, bestehend aus 12 Heizstäben (Leistung pro Stab: 2 kW) geführt, wobei der Abstand zu den Heizstäben ca. 10–15 cm beträgt. Unmittelbar anschliessend wird ein genadeltes Baumwollvlies zukaschiert. Es entsteht ein für die Herstellung von Schuhobermaterial geeignetes Kunstleder mit fülligem, angenehmen Griff.

Beispiel 2

Das zweischichtige Verbundmaterial gemäss Beispiel 1 a) wird auf einer Flammkaschieranlage der Firma PLA-MA Ltd., Vegesund/Norwegen mit einer solchen Geschwindigkeit über eine Gasflamme geführt, dass die Schaumschicht nicht verbrannt sondern nur angeschmolzen wird. Unmittelbar anschliessend wird ein genadeltes Baumwollvlies zukaschiert. Es entsteht ein für die Herstellung von Schuhobermaterial geeignetes Kunstleder mit fülligem, angenehmen Griff.

Beispiel 3
a) Herstellung einer zweischichtigen Folie:

Auf das Umkehrpapier wird mittels einer hin- und herbewegten Pistolenspritzmaschine ein in Toluol gelöstes reaktives Gemisch aus m-Toluylendiamin und einem Isocyanatgruppen aufweisenden Präpolymeren aus 120 Gew.-Teilen eines Adipinsäure 1,6-Hexandiol Neopentylglykol-Polyesters (Molgewicht 1700) und 25 Gew.-Teilen 2,4-Toluylendiisocyanat ($NCONH_2$ = 1,04) aufgesprüht. Die versprühte Masse verläuft filmartig und beginnt nach etwa einer Minute, vom Zeitpunkt des Aufsprühens an gerechnet, abzubinden. Nach Durchlaufen eines auf 80 °C beheizten Trokkenkanals wird nach 8 Minuten, vom Zeitpunkt des Aufsprühens an gerechnet, auf die ausgehärtete Deckschicht das schäumfähige Reaktivsystem nach Beispiel 1a) in einer Schichtdicke von ca. 150–200 g Polyurethanfeststoff/m² aufgetragen.

Der Erweichungsbereich der Deckschicht liegt bei ca. 220 bis 230 °C.

b) Erfindungsgemässes Verfahren:

Die zweischichtige Folie wird nach der allgemeinen Arbeitsweise von Beispiel 1b) auf ein Spaltleder kaschiert. Es entsteht ein für die Herstellung von Schuhobermaterial geeignetes Kunstleder mit etwas härterem Griff.

**Patentanspruch**

Verfahren zur lösungsmittelfreien Beschichtung von Textilien, Leder oder Spaltleder mit einem Flächengebilde auf Basis eines Polyurethanschaums, wobei man eine Oberfläche des Schaums mittels eines Infrarotfeldes oder einer Flamme über ihren Erweichungspunkt erwärmt und danach mit dem zu beschichtenden Substrat kaschiert, wobei die erweichte Oberfläche der Schaumschicht dem Substrat zugewandt ist, dadurch gekennzeichnet, dass das Flächengebilde auf Basis eines Polyurethanschaums eine zweischichtige Folie ist, welche aus
a) einer gegebenenfalls gefärbten Deckschicht mit einem Gewicht von 20 bis 300 g/m² und
b) einer Polyurethan-Schaumschicht mit einer Dikke zwischen 0,2 und 0,5 mm und einem Raumgewicht zwischen 500 und 800 g/l, welche entweder durch Einrühren von Luft in eine wässrige Polyurethan-Dispersion und anschliessendes Auftrocknen oder durch Aushärten eines reaktiven Gemisches aus einer höhermolekularen Polyhydroxylverbindung, einem Polyisocyanat und einer Verbindung, die beim Erhitzen ein Gas abspaltet, hergestellt wurde, aufgebaut ist.

**Revendication**

Procédé de doublage sans solvant de matières textiles, de cuir ou de cuir refendu, avec un corps plan à base d'une mousse de polyuréthanne, dans lequel une surface de la mousse est chauffée au-dessus de son point de ramollissement au moyen d'un champ infrarouge ou d'une flamme, puis elle est recouverte avec le substrat à doubler, la surface ramollie de la couche de mousse étant tournée vers le substrat, caractérisé en ce que le corps plan à base d'une mousse de polyuréthanne est une feuille à deux couches, qui est formée
a) d'une couche extérieure éventuellement colorée d'un poids de 20 à 300 g/m² et
b) d'une couche de mousse de polyuréthanne ayant une épaisseur de 0,2 à 0,5 mm et un poids par unité de volume de 500 à 800 g/l, qui a été produite, soit par introduction d'air dans une dispersion aqueuse de polyuréthanne et séchage subséquent, soit par durcissement d'un mélange réactif d'un composé polyhydroxylique de poids moléculaire élevé, d'un polyisocyanate et d'un composé qui libère un gaz par chauffage.

**Claim**

Process for the solvent-free coating of textiles, leather or split leather with a sheet having a polyurethane foam base, wherein one surface of the foam is heated beyond its softening point by meansof an infrared filed or a flame and is then laminated with the substrate to be coated, the softened surface of the foam layer facing the substrate, characterised in that the sheet with a polyurethane foam base is a two-layered film which is composed of
a) an optionally coloured surface layer having a weight of 20 to 300 g/m² and
b) a polyurethane foam layer having a thickness of between 0,2 and 0,5 mm and a unit weight of between 500 and 800 g/l which has been produced either by stirring air into an aqueous polyurethane dispersion, followed by drying, or by hardening a reactive mixture of a relatively high molecular weight polyhydroxyl compound, a polyisocyanate and a compound which gives off a gas on heating.